# EUROPEAN PATENT APPLICATION

(11) **EP 4 358 395 A1**
(43) Date of publication of application: **24.04.2024**
(21) Application number: 21964480.4
(22) Date of filing: 22.11.2021
(51) Int. Cl.: H02P 27/00, B60L 53/24

(54) **CHARGING AND DISCHARGING CIRCUIT AND SYSTEM, AND CONTROL METHOD THEREFOR**

(71) Applicant: Contemporary Amperex Technology Co., Limited, Ningde, Fujian 352100 (CN)
(72) Inventor: HUANG, Xiaojian, Ningde, Fujian 352100 (CN); FU, Chenghua, Ningde, Fujian 352100 (CN); DAN, Zhimin, Ningde, Fujian 352100 (CN)
(74) Representative: Ziebig Hengelhaupt Intellectual Property Attorneys Patentanwaltskanzlei PartGmbB
(86) International application number: PCT/CN2021/132202
(87) International publication number: WO 2023/087331

(57) **Abstract**

Embodiments of the present application provide a charge-and-discharge circuit, a charge-and-discharge system and a charge-and-discharge control method. The charge-and-discharge circuit includes: a power supply module including at least a first battery pack; an inverter module including an M-phase bridge arm, where M is a positive integer greater than 0; a charge-and-discharge control module including a charge-and-discharge loop switch bridge arm; and a drive module including an M-phase motor. The first battery pack, the M-phase bridge arm, and the charge-and-discharge loop switch bridge arm are connected in parallel. Junction points between upper and lower bridge arms of the M-phase bridge arm are respectively connected to M phases of windings of the M-phase motor in a one-to-one correspondence manner. A junction point between upper and lower bridge arms of the charge-and-discharge loop switch bridge arm are connected to the M-phase motor. By connecting the junction point between the upper and lower bridge arms of the charge-and-discharge loop switch bridge arm to the M-phase motor, currents flowing through the M-phase motor are enabled to have the same magnitude and the same current phase, and accordingly, noises caused by uneven magnetic fields of a stator under a heating condition of a motor are avoided.

## Description

### TECHNICAL FIELD

The present application relates to the field of batteries, and in particular, to a charge-and-discharge circuit, a charge-and-discharge system and a charge-and-discharge control method.

### BACKGROUND

Due to the advantages of high energy density, cyclic charging, safety and environmental protection, power batteries are widely used in fields such as new energy vehicles, consumer electronics, and energy storage systems.

However, the use of power batteries under low temperature environment will be subject to certain restrictions. Specifically, a discharge capacity of a power battery will decline seriously in a low temperature environment, and the battery cannot be charged at a low temperature. Therefore, to enable a normal use of the power battery, the power battery needs to be heated in a low temperature environment.

Conventional power battery heating technologies may lead to a problem of excessive vibration and noise of a motor in a process of using a motor circuit to heat the power battery.

### SUMMARY

Embodiment of the present application provides a charge-and-discharge circuit, a charge-and-discharge system and a charge-and-discharge control method, which can effectively suppress the vibration and noise of the motor when the battery is heated by the motor circuit.

In accordance with a first aspect, a charge-and-discharge circuit is provided, including: a power supply module, an inverter module, a charge-and-discharge control module, and a drive module. The power supply module includes at least a first battery pack. The inverter module includes an M-phase bridge arm, and M is a positive integer greater than 0. The charge-and-discharge control module includes a charge-and-discharge loop switch bridge arm. The drive module includes an M-phase motor. The first battery pack, the M-phase bridge arm, and the charge-and-discharge loop switch bridge arm are connected in parallel. Junction points between upper bridge arms and lower bridge arms of the M-phase bridge arm are respectively connected to M phases of windings of the M-phase motor in a one-to-one correspondence manner. A junction point between an upper bridge arm and a lower bridge arm of the charge-and-discharge loop switch bridge arm is connected to the M-phase motor.

The junction point between an upper bridge arm and a lower bridge arm of the charge-and-discharge loop switch bridge arm is connected to the M-phase motor, so that currents flowing through the M-phase motor are enabled to have the same magnitude and the same current phase, thereby avoiding noises caused by uneven magnetic fields of a stator under a heating condition of a motor.

In accordance with a second aspect, a charge-and-discharge circuit is provided, including: a power supply module, an inverter module, a charge-and-discharge control module, a drive module, and a switch unit. The power supply module includes at least a first battery pack and a second battery pack. The inverter module includes an M-phase bridge arm, and M is a positive integer greater than 0. The charge-and-discharge control module includes a charge-and-discharge loop switch bridge arm. The drive module includes an M-phase motor. The first battery pack and the M-phase bridge arm are connected in parallel, where a first end of the first battery pack and upper bridge arms of the M-phase bridge arm are collinearly connected. Junction points between lower bridge arms and the upper bridge arms of the M-phase bridge arm are respectively connected to M phases of windings of the M-phase motor in a one-to-one correspondence manner. A junction point between an upper bridge arm and a lower bridge arm of the charge-and-discharge loop switch bridge arm is connected to the M-phase motor. A first end of the second battery pack and the upper bridge arm of the charge-and-discharge loop switch bridge arm are collinearly connected. A second end of the second battery pack, a second end of the first battery pack, the lower bridge arms of the M-phase bridge arm and the charge-and-discharge loop switch bridge arm are collinearly connected. The switch unit is arranged between the first end of the first battery pack and the first end of the second battery pack.

By arranging the charge-and-discharge loop switch bridge arm, a switching of a flow direction of the current output from the M-phase motor can be realized to control a charge-and-discharge process of the power supply unit, so that the magnitude of the charging current can be increased when the circuit of the M-phase motor is used to heat the power supply module, thereby improving the charging efficiency. In addition, the junction point between the upper and lower bridge arms of the charge-and-discharge loop switch bridge arm is connected to the M-phase motor, which enables the M-phase motor to generate zero-sequence current, thereby avoiding a rotor heating due to the uneven magnetic fields during the operation of the motor, which in turn causes a motor demagnetization.

In a possible implementation, at least one external inductance unit is arranged between the M-phase motor and the charge-and-discharge loop switch bridge arm.

In a possible implementation, the junction point between the upper bridge arm and the lower bridge arm of the charge-and-discharge loop switch bridge arm is connected to one end of the at least one external inductance unit, and the other end of the at least one external inductance unit is connected to a common junction point of the M phases of windings of the M-phase motor.

By providing an external energy storage element, the impedance of energy storage elements such as motor windings can be effectively increased, so that the charge or discharge current of the power supply module can be maintained at a relatively high level, thereby effectively improving a charge or discharge efficiency of the power supply module and increasing a heating rate of the battery.

In a possible implementation, the M-phase motor is a dual-motor, including a first M-phase motor and a second M-phase motor. A junction point of M phases of windings of the first M-phase motor is connected to a junction point of M phases of windings of the second M-phase motor.

In a possible implementation, the junction points between the upper bridge arms and the lower bridge arms of the M-phase bridge arm are respectively connected to the M phases of windings of the first M-phase motor in a one-to-one correspondence manner.

In a possible implementation, junction points between upper bridge arms and lower bridge arms of the charge-and-discharge loop switch bridge arm are respectively connected to the M phases of windings of the second M-phase motor in a one-to-one correspondence manner.

By connecting the junction points of windings of the dual-motors and controlling an on-and-off switching of a motor controller at the same time, the currents flowing into the motor and out of the motor are always kept in the same direction, so that the combined magnetic fields generated by the windings during the heating process of the motor is minimized, which can effectively reduce the vibration and noise of the motor and the heating problem of the rotor.

In accordance with a third aspect, a charge-and-discharge system is provided. The system includes a control module and the above-mentioned charge-and-discharge circuit. The control module is configured to send an instruction to the charge-and-discharge circuit to control the power supply module to be charged or discharged.

In accordance with a fourth aspect, a charge-and-discharge control method is provided, which is applied to a power consumption system. The power consumption system includes: a control module and a charge-and-discharge circuit. The charge-and-discharge circuit includes: a power supply module, an inverter module, a charge-and-discharge control module, and a drive module. The power supply module includes at least a first battery pack. The inverter module includes an M-phase bridge arm, and M is a positive integer greater than 0. The charge-and-discharge control module includes a charge-and-discharge loop switch bridge arm. The drive module includes an M-phase motor. The first battery pack, the M-phase bridge arm, and the charge-and-discharge loop switch bridge arm are connected in parallel. Junction points between upper bridge arms and lower bridge arms of the M-phase bridge arm are respectively connected to M phases of windings of the M-phase motor in a one-to-one correspondence manner. A junction point between an upper bridge arm and a lower bridge arm of the charge-and-discharge loop switch bridge arm is connected to the M-phase motor. The method includes: in response to an enable signal sent by the controller, switching on the upper bridge arms or the lower bridge arms of the M-phase bridge arm, and switching on the upper bridge arm or the lower bridge arm of the charge-and-discharge switch bridge arm, so as to form a charge loop or a discharge loop; and repeatedly switching between the charge loop and the discharge loop to charge and discharge the power supply module.

In accordance with a fifth aspect, a charge-and-discharge control method is provided, which is applied to a power consumption system. The power consumption system includes: a control module and a charge-and-discharge circuit. The charge-and-discharge circuit includes: a power supply module, an inverter module, a charge-and-discharge control module, a drive module, and switch unit. The power supply module includes at least a first battery pack and a second battery pack. The inverter module includes an M-phase bridge arm, and M is a positive integer greater than 0. The charge-and-discharge control module includes a charge-and-discharge loop switch bridge arm. The drive module includes an M-phase motor. The first battery pack and the M-phase bridge arm are connected in parallel, where a first end of the first battery pack and upper bridge arms of the M-phase bridge arm are collinearly connected. Junction points between lower bridge arms and the upper bridge arms of the M-phase bridge arm are respectively connected to M phases of windings of the M-phase motor in a one-to-one correspondence manner. A junction point between an upper bridge arm and a lower bridge arm of the charge-and-discharge loop switch bridge arm is connected to the M-phase motor. A first end of the second battery pack and the upper bridge arm of the charge-and-discharge loop switch bridge arm are collinearly connected. A second end of the second battery pack, a second end of the first battery pack, the lower bridge arms of the M-phase bridge arm and the charge-and-discharge loop switch bridge arm are collinearly connected. The switch unit is arranged between the first end of the first battery pack and the first end of the second battery pack. The method includes: in response to an enable signal sent by the controller, switching on the upper bridge arms or the lower bridge arms of the M-phase bridge arm, and switching on the upper bridge arm or the lower bridge arm of the charge-and-discharge switch bridge arm, so as to form a charge loop or a discharge loop; charging or discharging the first battery pack or the second battery pack through the charge loop or the discharge loop, and the charging and discharging comprises switching a charge-and-discharge state of the first battery pack and the second battery pack; wherein the switching the charge-and-discharge state comprises charging the first battery pack and discharging the second battery pack, or discharging the first battery pack and charging the second battery pack.

The upper and lower bridge arms of the M-phase bridge arm are controlled by the control module, so that the winding currents of the M-phase motor are enabled to have the same magnitude and the same current phase, thereby avoiding the noise and the rotor heating generated due to the uneven magnetic fields during an operation of the motor, which in turn causes the motor demagnetization. In addition, the setting of dual batteries can effectively reduce the constraints of the motor inductance on the magnitude of the heating current and a frequency of the heating current. Through the heating method of the dual batteries, the energy of the energy storage element can be discharged to one of the batteries in time, so that the battery's heating current can be maintained at a stable heating current according to a preset heating frequency, so that the heating rate of the battery can be greatly improved by adjusting the frequency of the heating current at different temperatures and SOC states.

### BRIEF DESCRIPTION OF DRAWINGS

To illustrate the technical solutions of the embodiments of the present application more clearly, the following will briefly introduce the drawings that need to be used in the embodiments of the present application. Obviously, the drawings described below are merely some embodiments of the present application. For persons of ordinary skills in the art, other drawings may also be obtained based on these drawings on the premise of paying no creative efforts.
FIG. 1 is a circuit diagram of a conventional charge-and-discharge circuit;
FIG. 2 is a schematic block diagram of a discharge circuit provided by an embodiment of the present application;
FIG. 3 is a circuit diagram of a charge-and-discharge circuit provided by an embodiment of the present application;
FIG. 3a is a circuit diagram of a charge-and-discharge circuit provided by an embodiment of the present application;
FIG. 3b is a circuit diagram of a charge-and-discharge circuit provided by an embodiment of the present application;
FIG. 3c is a circuit diagram of a charge-and-discharge circuit provided by an embodiment of the present application;
FIG. 4 is a circuit diagram of a charge-and-discharge circuit provided by an embodiment of the present application;
FIG. 4a is a circuit diagram of a charge-and-discharge circuit provided by an embodiment of the present application;
FIG. 4b is a circuit diagram of a charge-and-discharge circuit provided by an embodiment of the present application;
FIG. 4c is a circuit diagram of a charge-and-discharge circuit provided by an embodiment of the present application;
FIG. 5 is a schematic block diagram of a charge-and-discharge system provided by an embodiment of the present application;
FIG. 6 is a flow chart of a control method for a power battery in a heating scenario provided by an embodiment of the present application; and
FIG. 7 is a schematic block diagram of a charge-and-discharge control device provided by an embodiment of the present application.

### DETAILED DESCRIPTION OF EMBODIMENTS

Implementations of the present application will be further described in detail below with reference to the drawings and embodiments. The detailed description and drawings of the following embodiments are used to illustrate the principles of the present application, and are not intended to limit the scope of the present application, that is, the present application is not limited to the described embodiments.

In the description of the present application, it should be noted that, unless otherwise specified, the term "multiple" means more than two. Orientation or positional relationships indicated by terms "upper", "lower", "left", "right", "inner", "outside" etc., are used only for the convenience of describing the present application and simplifying the description, rather than indicating or implying that the device or element referred to must have a specific orientation, be constructed and operated in a specific orientation, and therefore cannot be understood as a restriction to the present application. In addition, the terms "first", "second", "third", etc. are used for descriptive purposes only and should not be construed as indicating or implying relative importance. The wording "vertical" used in here is not strictly vertical, but within an allowable range of error. The wording "parallel" used in here is not strictly parallel, but within an allowable range of error.

The orientation words appearing in the following description are the directions shown in the drawings, and do not limit the specific structure of the present application. In the description of the present application, it should also be noted that, unless otherwise clearly specified and limited, the terms "installation", "in connection with", and "connected to/with" should be interpreted in a broad sense, for example, it may be a fixed connection or a detachable connection, or an integral connection; it may be directly connected or indirectly connected through an intermediary. For persons of ordinary skill in the art, the specific meanings of the above terms in the present application can be understood according to specific situations.

With the development of the times, new energy vehicles have huge market prospects due to the advantages of environmental protection, low noise, and low cost of use, and can effectively promote energy conservation and emission reduction, which is conducive to social development and progress.

Due to the electrochemical characteristics of the power battery, the charging and discharging capacity of the power battery is greatly limited in a low temperature environment, which seriously affects the customer's car experience in winter. Therefore, in order to enable a normal use of the power battery, it is necessary to heat the power battery in a low temperature environment.

The power battery in the embodiments of the present application may be a lithium-ion battery, a lithium metal battery, a lead-acid battery, nickel-cadmium battery, a nickel-metal hydride battery, a lithium-sulfur battery, a lithium-air battery or a sodium-ion battery, etc., which will not be limited here. In terms of scale, the battery in the embodiments of the present application may be a single battery cell, or a battery module or battery pack, which is not limited here. In terms of application scenarios, the battery may be used in power devices such as automobiles, ships, etc. For example, the battery may be used in a power car, to supply power to a motor of the power car, as a power source for an electric car. The battery may also supply power to other electrical components in the electric vehicle, such as an in-car air conditioner, an in-vehicle player, etc.

For ease of description, the following will take that the power battery is applied to a new energy vehicle (power vehicle) as an example for exemplary description.

A driving motor (including a control system for the driving motor) is one of the core components of the new energy vehicle, and driving characteristics of the driving motor determine the main performance indicator of the vehicle. A motor drive system of the new energy vehicle is mainly composed of an electric motor (i.e., a motor), a motor controller (e.g., an inverter), various detection sensors, and a power supply. The motor is a rotational electromagnetic machine that is operated on the principle of electromagnetic induction, and is used to convert electrical energy into mechanical energy. During operation, the motor absorbs electrical power from an electrical system and outputs mechanical power to a mechanical system.

To avoid an unnecessary cost increase when heating the power battery, a motor circuit may be utilized to heat the power battery.

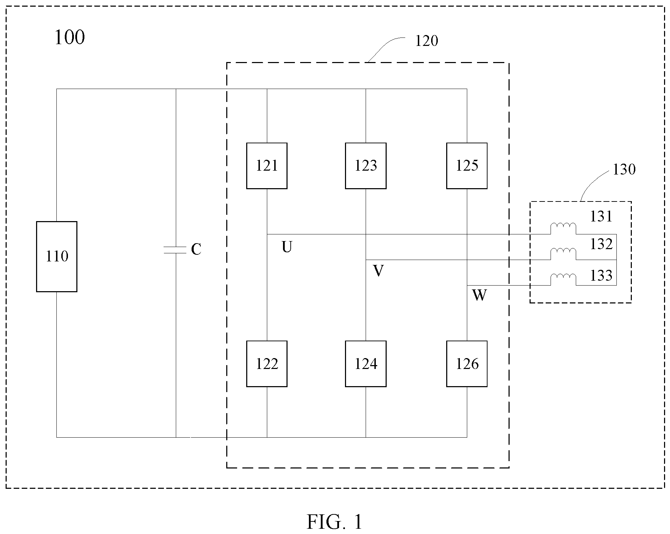

FIG. 1 shows a charge-and-discharge circuit diagram in a traditional power battery heating system. As shown in FIG. 1, the power battery heating system 100 may include a power supply module 110, an inverter module 120 connected to the power supply module 110, and a drive module 130 connected to the inverter module 120.

For the power supply module 110, the power supply module 110 may be a power battery itself, and may also be an external power supply module such as a charging pile. The heating energy provided by the external power supply module may be, for example, output by an external direct current (DC) charger, or output by an external alternating current (AC) charger after rectification, which is not specifically limited here.

For the inverter module 120, various types of switches may be used for implementation. For example, the inverter module 120 may be an inverter in the motor drive system, where the inverter may be implemented by using a bridge-arm switch of an insulated gate bipolar power transistor (Insulated Gate Bipolar Transistor, IGBT). Specifically, the number of bridge arms of the inverter is the same as the number of windings in the drive module 130. For example, the drive module 130 includes a three-phase winding motor, and the inverter includes a three-phase bridge arm, that is, a U-phase bridge arm, a V-phase bridge arm and a W-phase bridge arm. Each phase bridge arm in the three-phase bridge arm has an upper bridge arm and a lower bridge arm, and the upper bridge arm and the lower bridge arm are respectively provided with a switch unit, that is, the inverter module 120 includes an upper bridge-arm switch 121 and a lower bridge-arm switch 122 of the U-phase bridge arm, an upper bridge-arm switch 123 and a lower bridge-arm switch 124 of the V-phase bridge arm, and an upper bridge-arm switch 125 and a lower bridge-arm switch 126 of the W-phase bridge arm.

For the drive module 130, the drive module 130 may specifically include: a winding 131 connected to the U-phase bridge arm, a winding 132 connected to the V-phase bridge arm, and a winding 133 connected to the W-phase bridge arm. One end of the winding 131 is connected to a junction point between the upper bridge arm and the lower bridge arm of the U-phase bridge arm, one end of the winding 132 is connected to a junction point between the upper bridge arm and the lower bridge arm of the V-phase bridge arm, and one end of the winding 133 is connected to a junction point between the upper bridge arm and the lower bridge arm of the W-phase bridge arm. The other end of the winding 131, the other end of the winding 132 and the other end of the winding 133 are collinearly connected.

It should be noted that the drive module 130 is not limited to a three-phase winding motor, but may also be a six-phase winding motor or the like. Correspondingly, the inverter module 120 may include a three-phase bridge arm or a six-phase bridge arm.

In some embodiments, a current may be modulated by controlling the switches in the inverter module 120 to be switched on and off periodically. For example, the current is modulated by controlling a target upper bridge-arm switch and a target lower bridge-arm switch in the inverter module 120 to be switched on and off periodically. In one example, if the target upper bridge-arm switch is the upper bridge-arm switch 121, then the target lower bridge-arm switch is the lower bridge-arm switch 124 and/or the lower bridge-arm switch 126. In another example, if the target upper bridge-arm switch is the upper bridge-arm switch 123, then the target lower bridge-arm switch is the lower bridge-arm switch 122 and/or the lower bridge-arm switch 126. In another example, if the target upper bridge-arm switch is the upper bridge-arm switch 125, then the target lower bridge-arm switch is 122 and/or the lower bridge-arm switch 124. In another example, if the target upper bridge-arm switch is the upper bridge-arm switch 121 and/or the upper bridge-arm switch 123, then the target lower bridge-arm switch is 126. In another example, if the target upper bridge-arm switch is the upper bridge-arm switch 123 and/or the upper bridge-arm switch 125, then the target lower bridge-arm switch is the lower bridge-arm switch 122. In another example, if the target upper bridge-arm switch is the upper bridge-arm switch 121 and/or the upper bridge-arm switch 125, then the target lower bridge-arm switch is 124.

It should be noted that the target upper bridge-arm switch and the target lower bridge-arm switch in each cycle of periodically switching on and off may be the same or different, which is not limited in here. For example, in each cycle, the upper bridge-arm switch 121 and the lower bridge-arm switch 124 are controlled to be switched on and off. For another example, in a first cycle, the upper bridge-arm switch 121 and the lower bridge-arm switch 124 are controlled to be switched on and off; in a second cycle, the upper bridge-arm switch 123 and the lower bridge-arm switch 1224 are controlled to be switched on and off; and in a third cycle, the upper bridge-arm switch 121, the lower bridge-arm switch 124 and the lower bridge-arm switch 126 4 are controlled to be switched on and off. That is, in different cycles, the target upper bridge arm switch and the lower bridge-arm switch to be controlled may be different.

It thus can be seen that, in the charge-and-discharge circuit shown in FIG. 1, the target conduction switch includes at least one upper bridge-arm switch and at least one lower bridge-arm switch, and at least one upper bridge-arm switch and at least one lower bridge-arm switch are located on different bridge arms. Therefore, all the upper or lower arms cannot be switched on simultaneously in one cycle, so that the direction of current flow is different in the different loops formed between the power supply module, the target upper arm switch, the target lower arm switch, and the motor winding, thereby resulting in an alternating current.

Since the magnetomotive force of the unidirectional winding is in a stepped spatial distribution, it is a pulse magnetomotive force that alternates with time according to a changing law of current. The magnetomotive forces of three single-phase windings are superimposed to form a synthetic magnetic field of a three-phase winding. Usually, the currents flowing into the three-phase winding of the three-phase winding motor in a heating process are not exactly the same in magnitude, and the currents flowing through the two phases of windings have a phase difference of 180°, and the two phases of currents without phase difference are equal in magnitude. This will result in that the three phases of current flowing through the windings of the motor are asymmetrical to each other, and the high frequency of the current will cause the problem of large vibration and noise of the motor during the heating process of the power battery.

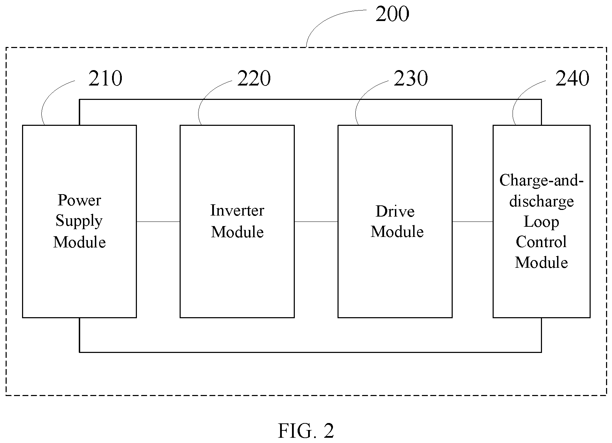

FIG. 2 shows a schematic block diagram of a charge-and-discharge circuit 200 provided by an embodiment of the present application.

As shown in FIG. 2, the charge-and-discharge circuit 200 includes: a power supply module 210, an inverter module 220, a drive module 230 and a charge-and-discharge loop control module 240.

The power supply module 210 is in connection with the inverter module 220 and the charge-and-discharge loop control module 240, respectively.

The inverter module 220 is in connection with the power supply module 210 and the drive module 230, respectively.

The drive module 230 is in connection with the inverter module 220 and the charge-and-discharge loop control module, respectively.

The charge-and-discharge control module 240 is in connection with the power supply module.

Specifically, the power supply module includes a battery pack, and the battery pack may be a collection of multiple battery modules, or a battery module including multiple battery cells. The inverter module 220 is an inverter that includes an M-phase bridge arm, where M is a positive integer greater than 0; each phase bridge arm includes an upper bridge arm and a lower bridge arm, for example, a three-phase bridge arm includes three upper bridge arms and three lower bridge arms. The drive module 230 includes an M-phase motor. The charge-and-discharge control module 240 includes a charge-and-discharge loop switch bridge arm that includes an upper bridge arm and a lower bridge arm.

In one example, the first battery pack, the M-phase bridge arm, and the charge-and-discharge loop switch bridge arm are connected in parallel. The junction points of the upper and lower bridge arms of the M-phase bridge arm are respectively connected to the M phases of windings of the M-phase motor in a one-to-one correspondence manner; The junction point between the upper and lower bridge arms of the charge-and-discharge loop switch bridge arm is connected to the M-phase motor.

To form a charge loop or a discharge loop in the charge-and-discharge circuit 200, the upper bridge arm or the lower bridge arm of the M-phase bridge arm, as well as the upper bridge arm or the lower bridge arm of the charge-and-discharge loop switch bridge arm need to be switched on. It is assumed that an upper end of the power supply module is a positive pole and a lower end of the power supply module is a negative pole, in case that the upper bridge arm of the M-phase bridge arm and the lower bridge arm of the charge-and-discharge loop switch bridge arm are switched on, the discharge loop is formed, in the case, the current flows out from the positive pole of the power supply module, via the M upper bridge arms of the M-phase bridge arm, and via the M-phase motor, and then returns to the negative pole of the power supply module from the lower bridge arm of the charge-and-discharge loop switch bridge arm. In case that the lower bridge arm of the M-phase bridge arm and the upper bridge arm of the charge-and-discharge loop switch bridge arm are switched on, a charge loop is formed, in this case, the current flows out from the negative pole of the power supply module, via the M lower bridge arms of the M-phase bridge arm, and via the M-phase motor, and then returns to the positive pole of the power supply module from the upper bridge arm of the charge-and-discharge loop switch bridge arm.

By periodically switching the charge loop and the discharge loop, a current flow is enabled inside the power supply module, thereby heat is generated for heating the power supply module.

In this embodiment, the drive module 230 is connected to not only the inverter module 220, but also the charge-and-discharge control module 240, thereby currents flowing through the inverter module 220 are enabled to simultaneously flow in from all windings of the drive module 230, and to flow out from the other ends of all windings, and thus the currents flowing through the drive module 230 can be currents of the same direction and magnitude, rather than being alternating currents of different directions. Therefore, the problem of excessive vibration and noise of the motor in the process of using the motor circuit to heat the power battery can be effectively reduced.

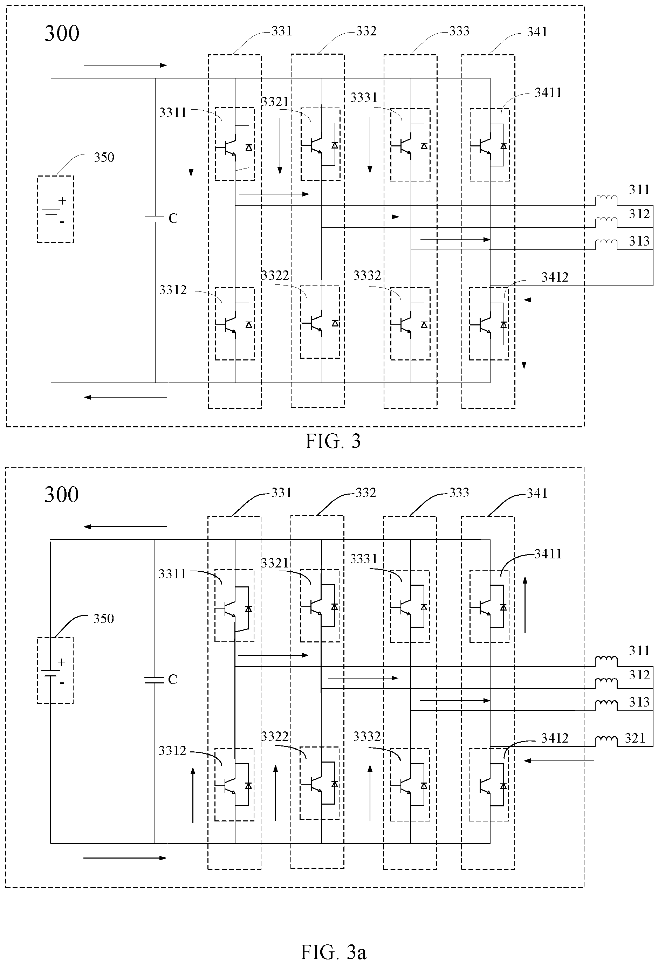

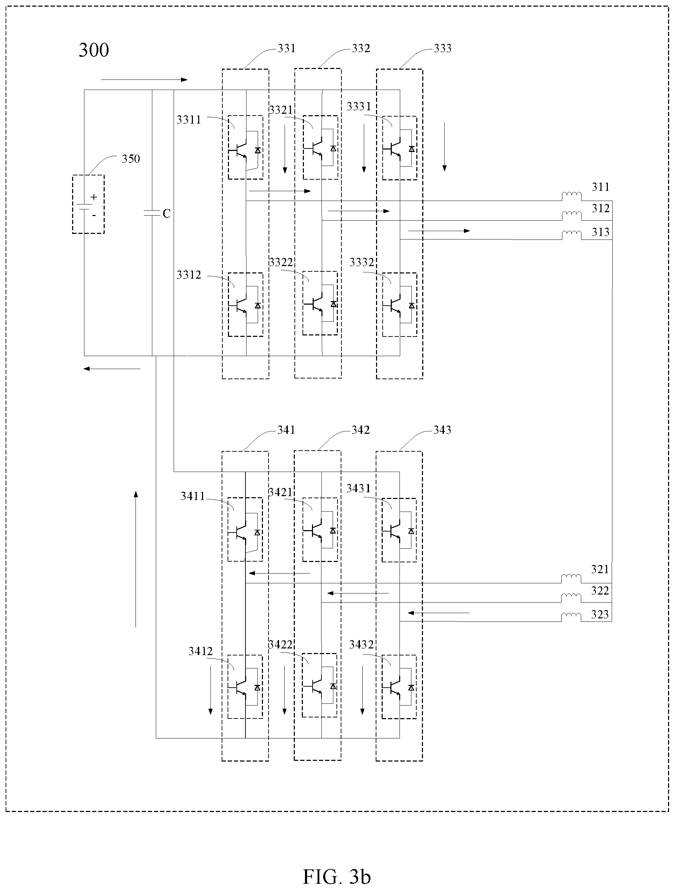

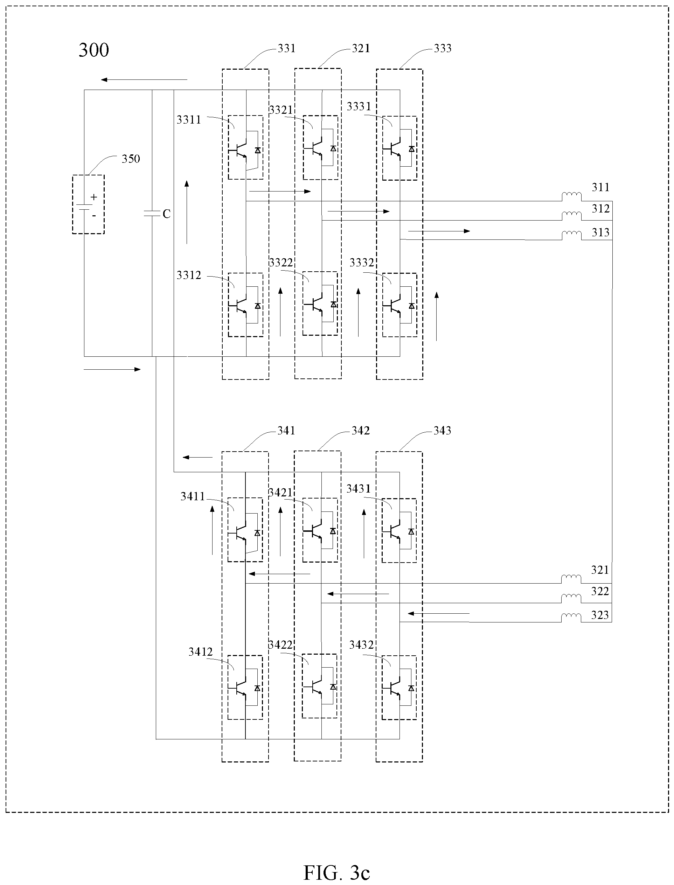

Circuit diagrams of a charge-and-discharge circuit 300 provided by an embodiment of the present application will be described in detail below with reference to FIGS. 3, 3a, 3b and 3c.

As shown in FIG. 3, in the charge-and-discharge circuit 300, the power supply module includes a first battery pack 350, an M-phase bridge arm, an M-phase motor, and a charge-and-discharge loop switch bridge arm 341. The first battery pack 350, the M-phase bridge arm, and the charge-and-discharge loop switch bridge arm 341 are connected in parallel. The junction points between the upper and lower bridge arms of the M-phase bridge arm are respectively connected to the M phases of windings of the M-phase motor in a one-to-one correspondence manner. The junction point between the upper and lower bridge arms of the charge-and-discharge loop switch bridge arm is connected to the M-phase motor.

Specifically, the M-phase bridge arm is a three-phase bridge arm, including bridge arms 331, 332 and 333. The M-phase motor is a three-phase winding motor, including multiple windings, that is, windings 311, 312 and 313. The first battery pack 350, the bridge arm 331, the bridge arm 332, the bridge arm 333 and the bridge arm 341 are connected in parallel. The junction point between the upper bridge arm 3311 and the lower bridge arm 3312 of the bridge arm 331 is connected to one end of the winding 311, the junction point between the upper bridge arm 3321 and the lower bridge arm 3322 of the bridge arm 332 is connected to one end of the winding 312, and the junction point between the upper bridge arm 3331 and the lower bridge arm 3332 of the bridge arm 333 is connected to one end of the winding 313. The other end of the winding 311, the other end of the winding 312, the other end of the winding 313 and the other end of an external inductor 321 are collinearly connected, and the junction point between the upper bridge arm 3411 and the lower bridge arm 3412 of the charge-and-discharge loop switch bridge arm 341 is connected to the common junction point of the windings 311, 312, 313.

As shown in FIG. 3, the first battery pack 350, the upper bridge arms 3311, 3321, 3331, the windings 311, 312, 313, and the lower bridge arm 3412 of the charge-and-discharge loop switch bridge arm 341 together form a discharge loop. A discharge current flows out from the positive pole of the first battery pack 350, and enters the windings 311, 312 and 313 via the upper bridge arm 3321 of the bridge arm 331, the upper bridge arm 3321 of the bridge arm 332, and the upper bridge arm 3331 of the bridge arm 333, and then returns to the negative pole of the first battery pack 350 via the lower bridge arm 3412 of the charge-and-discharge loop bridge arm 341.

In another aspect, the first battery pack 350, the lower bridge arms 3312, 3322, 3332, the windings 311, 312, 313 and the upper bridge arm 3411 of the charge-and-discharge loop switch bridge arm 341 together form a charge loop (not shown in the figures). A charging current flows out from the negative pole of the first battery pack 350, and enters the windings 311, 312 and 313, via the lower bridge arm 3312 of the bridge arm 331, the lower bridge arm 3322 of the bridge arm 332 and the lower bridge arm 3332 of the bridge arm 333, and then returns to the positive pole of the first battery pack 350 via the upper bridge arm 3411 of the charge-and-discharge loop switch bridge arm 341.

In the embodiment shown in FIG. 3, by connecting the junction point of the motor winding with the junction point of the charge-and-discharge loop switch bridge arm, the current is allowed to flow in from all windings at the same time during charging or discharging without going through any one-phase winding to flow out. Since the currents flowing in or out of the three-phase winding are always equal in magnitude and the phase difference is zero, the stator magnetic field formed by the three phases of windings being spatially symmetrical is approximate to zero, so that the vibration and noise generated due to the interaction between the stator magnetic field and the rotor magnetic field is effectively suppressed during the process of using a first motor circuit to heat the power battery.

In one example, at least one external inductance unit is provided between the M-phase motor and the charge-and-discharge loop switch bridge arm. Specifically, the junction point between the upper and lower bridge arms of the charge-and-discharge loop switch bridge arm is connected to one end of at least one external inductance unit, and the other end of the at least one external inductance unit is connected to the junction point of the M phases of windings of the M-phase motor.

As shown in FIG. 3a, in the charge-and-discharge circuit 300, the power supply module includes a first battery pack 350, an M-phase bridge arm, an M-phase motor, and a charge-and-discharge loop switch bridge arm 341. The first battery pack 350, the M-phase bridge arm and the charge-and-discharge loop switch bridge arm 341 are connected in parallel. The junction points between the upper and lower bridge arms of the M-phase bridge arm are respectively connected to the M phases of windings of the M-phase motor in a one-to-one correspondence manner. The junction point between the upper and lower bridge arms of the charge-and-discharge loop switch bridge arm is connected to the M-phase motor.

Specifically, the M-phase bridge arm is a three-phase bridge arm, including bridge arms 331, 332 and 333. The M-phase motor is a three-phase winding motor, including multiple windings, that is, windings 311, 312 and 313. The first battery pack 350, the bridge arm 331, the bridge arm 332, the bridge arm 333 and the bridge arm 341 are connected in parallel. The junction point between the upper bridge arm 3311 and the lower bridge arm 3312 of the bridge arm 331 is connected to one end of the winding 311, the junction point between the upper bridge arm 3321 and the lower bridge arm 3322 of the bridge arm 332 is connected to one end of the winding 312, and the junction point between the upper bridge arm 3331 and the lower bridge arm 3332 of the bridge arm 333 is connected to one end of the winding 313. The other end of the winding 311, the other end of the winding 312, and the other end of the winding 313 are in collinear connection with the other end of the external inductance unit 321. The junction point between the upper bridge arm 3411 and the lower bridge arm 3412 of the charge-and-discharge loop switch bridge arm 341 is connected to the junction point of the windings 311, 312, 313.

Optionally, the external inductance unit 321 may be a wire. In addition, the number of external inductance units may not be limited in the embodiments of the present application.

Optionally, the M-phase motor may also be a six-phase winding motor, and correspondingly, the M phases of windings may be all windings in the six-phase winding motor.

Optionally, the M-phase bridge arm may be a three-phase bridge arm or a six-phase bridge arm.

In the embodiment shown in 3a, by providing an external inductance unit between the motor and the charge-and-discharge loop switch bridge arm, the inductance can be increased, which is beneficial to reduce a current ripple during the heating process, thereby effectively increasing the current for charging and discharging, and improving a charge-and-discharge efficiency.

FIG. 3b and FIG. 3c show the circuit diagrams of the charge-and-discharge circuit 300 provided by embodiments of the present application.

In one example, the M-phase motor is a dual-motor, including a first M-phase motor and a second M-phase motor. The junction point of the M phases of windings of the first M-phase motor is connected to the junction point of the M phases of windings of the second M-phase motor. Specifically, both the first M-phase motor and the second M-phase motor are three-phase winding motors. The first M-phase motor includes windings 311, 312, 313. The second M-phase motor includes windings 321, 322, 323. A common junction point of the windings 311, 312, 313 is connected to a common junction point of the windings 321, 322, 323.

The junction points between the upper and lower bridge arms of the M-phase bridge arm are respectively connected to the M phases of windings of the first M-phase motor in a one-to-one correspondence manner. Specifically, the M-phase bridge arm includes a bridge arm 331, a bridge arm 332 and a bridge arm 333. Specifically, the junction point between the upper bridge arm 3311 and the lower bridge arm 3312 of the bridge arm 331 is connected to one end of the winding 311, the junction point between the upper bridge arm 3321 and the lower bridge arm 3322 of the bridge arm 332 is connected to one end of the winding 312, and the junction point between the upper bridge arm 3331 and the lower bridge arm 3332 of the bridge arm 333 is connected to one end of the winding 313.

The junction points between the upper and lower bridge arms of the charge-and-discharge loop switch bridge arm are respectively connected to the M phases of windings of the second M-phase motor in a one-to-one correspondence manner. Specifically, the charge-and-discharge loop switch bridge arm includes a bridge arm 341, a bridge arm 342 and a bridge arm 343. The junction point between the upper bridge arm 3411 and the lower bridge arm 3412 of the bridge arm 341 is connected to one end of the winding 321, the junction point between the upper bridge arm 3421 and the lower bridge arm 3422 of the bridge arm 342 is connected to one end of the winding 322, and the junction point between the upper bridge arm 3431 and the lower bridge arm 3432 of the bridge arm 343 is connected to one end of the winding 323. The other end of the winding 311, the other end of the winding 312, the other end of the winding 313, the other end of the winding 321, the other end of the winding 322 and the other end of the winding 323 are collinearly connected.

As shown in FIG. 3 b, the power supply module 350, the upper bridge arms 3311, 3321, 3331, the windings 311, 312, 313, the windings 321, 322, 323 and the lower bridge arms 3412, 3422, 3432 together form a discharge loop. As shown in FIG. 3c, the power supply module 350, the lower bridge arms 3312, 3322, 3332, the windings 311, 312, 313, the windings 321, 322, 323 and the upper bridge arms 3411, 3421, 3431 together form a charge loop. Where the charge loop and the discharge loop are periodically switched on alternately under a control of the control module (not shown in the figures).

In the embodiments shown in FIG. 3b and FIG. 3c, by controlling the currents flowing into the windings 311, 312, 313 to have the same magnitude and the same current phase, the vibration and noise of the first motor can be effectively suppressed during the process of using the motor circuit to heat the power battery. Similarly, by controlling the currents flowing out of the windings 321, 322, 323 to have the same magnitude and the same current phase, the vibration and noise of the second motor can be effectively suppressed during the process of using the motor circuit to heat the power battery.

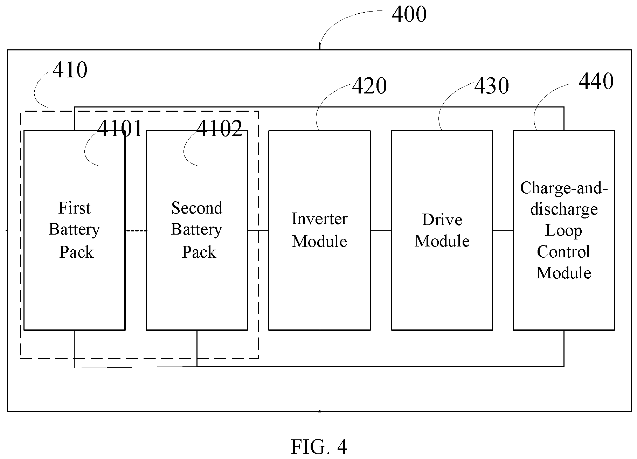

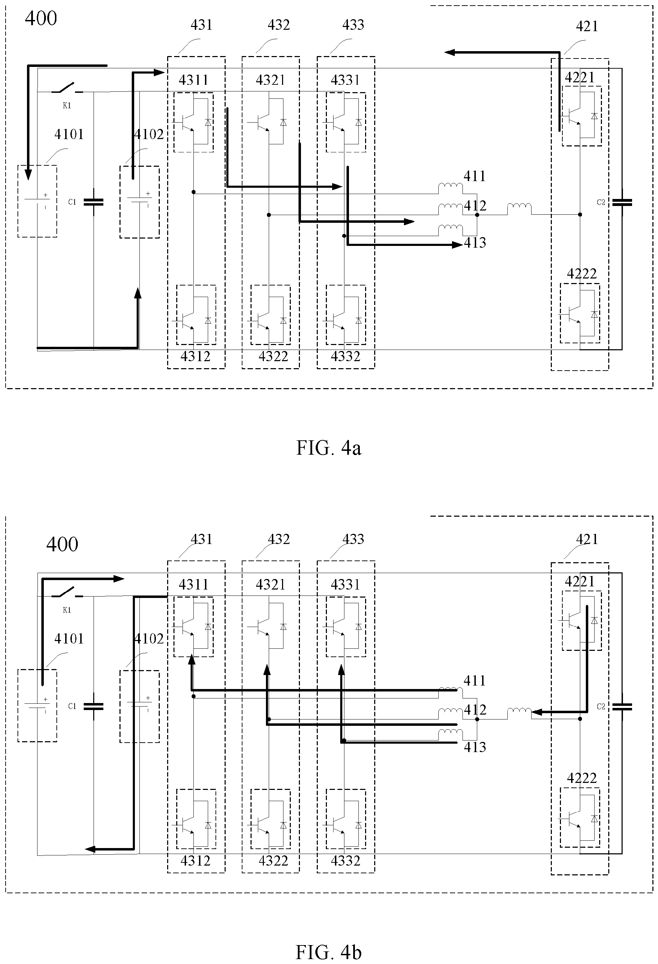

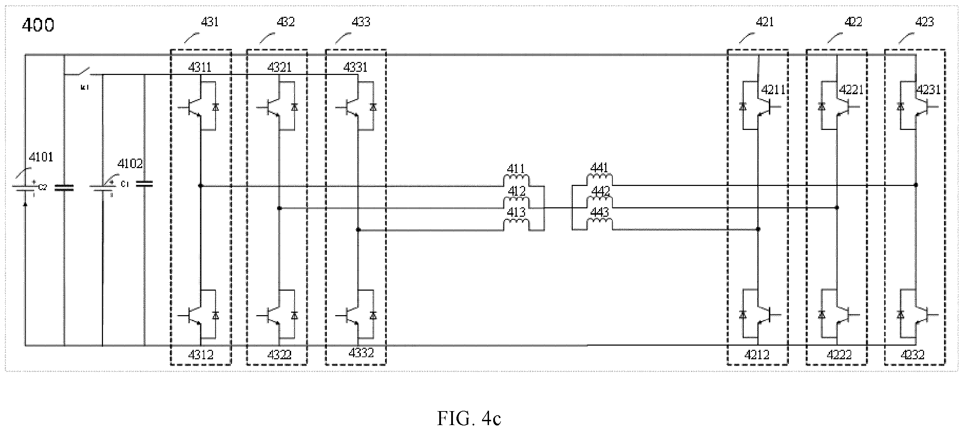

FIG. 4 shows a schematic block diagram of a charge-and-discharge circuit 300 provided by an embodiment of the present application.

As shown in FIG. 4, the charge-and-discharge circuit 400 includes: a power supply module 410, an inverter module 420, a drive module 430 and a charge-and-discharge loop control module 440.

Specifically, the power supply module 410 includes a first battery pack 4101 and a second battery pack 4102. The connection relationship between the first battery pack 4101 and the second battery pack 4102 is controlled by switching on or off a switch unit (not shown in the figures, the dotted line indicates a variable connection relationship). Specifically, the first battery pack 4101 and the second battery pack 4102 are connected in parallel when the switch unit is switched on; and the first battery pack 4101 and the second battery pack 4102 are connected in series when the switch unit is switched off. The battery pack may be a collection of multiple battery modules, or a battery module including multiple battery cells. The inverter module 420 may be implemented by an inverter that includes an M-phase bridge arm, and M is a positive integer greater than 0. Each phase bridge arm includes an upper bridge arm and a lower bridge arm, for example, a three-phase bridge arm includes three upper bridge arms and three lower bridge arms. The drive module 430 includes an M-phase motor; for example, the M-phase motor is a three-phase winding motor that has a three-phase winding. The charge-and-discharge control module 440 includes a charge-and-discharge loop switch bridge arm that includes an upper bridge arm and a lower bridge arm.

In one example, as shown in FIG. 4a, the first battery pack 4101 is connected in parallel with the M-phase bridge arm, where a first end of the first battery pack 4101 is in collinear connection with the upper bridge arms of the M-phase bridge arm. The junction points of the upper and lower bridge arms of the M-phase bridge arm are respectively connected to the M phases of windings of the M-phase motor in a one-to-one correspondence manner. The junction point of the upper and lower bridge arms of the charge-and-discharge loop switch bridge arm is connected to the M-phase motor. A first end of the second battery pack 4102 is in collinear connection with the upper bridge arms of the charge-and-discharge loop switch bridge arm. A second end of the second battery pack 4102 and a second end of the first battery pack 4101, and the lower bridge arms of the charge-and-discharge loop switch bridge arm and the M-phase bridge arm are in a collinear connection. The switch unit is arranged between the first end of the first battery pack and the first end of the second battery pack.

Specifically, the M-phase bridge arm is a three-phase bridge arm, including bridge arms 431, 432, and 433; the M-phase motor is a three-phase winding motor, including three phases of windings, that is, windings 411, 412, and 413. The charge-and-discharge loop switch bridge arm 421.

When the electric motor needs to be utilized to heat the power supply module, the switch unit is switched off, and at this time, the first battery pack 4101 is connected in series with the second battery pack 4102. The charge or discharge control of the first battery packs 4101 and 4102 can be realized by controlling the upper bridge arms or the lower bridge arms of the M-phase bridge arm, and the upper bridge arm and the lower bridge arm of the charge-and-discharge loop switch bridge arm. If it is is assumed that, in a first cycle, the first battery pack 4101 is charged and the second battery pack 4102 is discharged, then, a discharge current of the second battery pack 4102 flows out from a positive pole of the second battery pack 4102, and enters the windings 411, 412, 413 via the upper bridge arms 4311, 4321, 4331 of the bridge arms 431, 432, 433, then enters a positive pole of the first battery pack 4101 via the upper bridge arm 4211 of the charge-and-discharge loop switch bridge arm 421, and then flows out from a negative pole of the first battery pack 4101, and finally returns to a negative pole of the second battery pack 4102.

As shown in FIG. 4b, in a second cycle, the first battery pack 4101 is discharged and the second battery pack 4102 is charged. At this time, the discharge current of the first battery pack flows out from the positive pole of the first battery pack, enters into the windings 411, 412, 413 via the upper bridge arm 4211 of the charge-and-discharge loop switch bridge arm 421, then enters the positive pole of the second battery pack 4102 via the upper bridge arms 4311, 4321, 4331 of the bridge arms 431, 432, 433, and then flows out from the negative pole of the second battery pack 4102, and finally returns to the negative pole of the first battery pack 4101.

In this embodiment, the constraints of a motor inductance on a heating current and a frequency of the heating current can be effectively reduced through the design of dual battery pack. The energy of the energy storage element can be released to one battery in time, through the heating method of the dual batteries, and the heating current of the battery can be maintained at a stable heating current according to a preset heating frequency, so that the heating rate of the battery can be greatly improved by adjusting the frequency of the heating current at different temperatures and SOC states.

FIG. 4c shows another implementation of the charge-and-discharge circuit 400, that is, a circuit topology when the M motor is a dual-motor.

Specifically, as shown in FIG. 4c, the M-phase motor is a dual-motor, including a first M-phase motor and a second M-phase motor. The junction point of the M phases of windings of the first M-phase motor is connected to the junction point of the M phases of windings of the second M-phase motor. Specifically, both the first M-phase motor and the second M-phase motor are three-phase winding motors. The first M-phase motor includes windings 411, 412 and 413. The second M-phase motor includes windings 441, 442, 443. A common junction point of the windings 411, 412, 413 is connected to a common junction point of the windings 441, 442, 443.

The junction points between the upper and lower bridge arms of the M-phase bridge arm are respectively connected to the M phases of windings of the first M-phase motor in a one-to-one correspondence manner. Specifically, the M-phase bridge arm includes a bridge arm 431, a bridge arm 432 and a bridge arm 433. Specifically, the junction point between the upper bridge arm 4311 and the lower bridge arm 4312 of the bridge arm 431 is connected to one end of the winding 411, the junction point between the upper bridge arm 4321 and the lower bridge arm 4322 of the bridge arm 432 is connected to one end of the winding 412, and the junction point between the upper bridge arm 4331 and the lower bridge arm 4332 of the bridge arm 433 is connected to one end of the winding 413.

The junction points between the upper and lower bridge arms of the charge-and-discharge loop switch bridge arm are respectively connected to the M phases of windings of the second M-phase motor in a one-to-one correspondence manner. Specifically, the charge-and-discharge loop switch bridge arm includes a bridge arm 421, a bridge arm 422 and a bridge arm 423. The junction point between the upper bridge arm 4211 and the lower bridge arm 4212 of the bridge arm 421 is connected to one end of the winding 441, the junction point between the upper bridge arm 4221 and the lower bridge arm 4222 of the bridge arm 422 is connected to one end of the winding 442, and the junction point between the upper bridge arm 4231 and the lower bridge arm 4232 of the bridge arm 423 is connected to one end of the winding 443. The other end of the winding 441, the other end of the winding 442, the other end of the winding 443, the other end of the winding 411, the other end of the winding 412 and the other end of the winding 413 are connected.

In the embodiment of FIG. 4 c, by controlling the currents flowing into the windings 411, 412, 413 to have the same magnitude and the same current phase, the vibration and noise of the first motor can be effectively suppressed during the process of using the motor circuit to heat the power battery. Similarly, by controlling the currents flowing out of the windings 4411, 442, 443 to have the same magnitude and the same current phase, the vibration and noise of the second motor can be effectively suppressed during the process of using the motor circuit to heat the power battery.

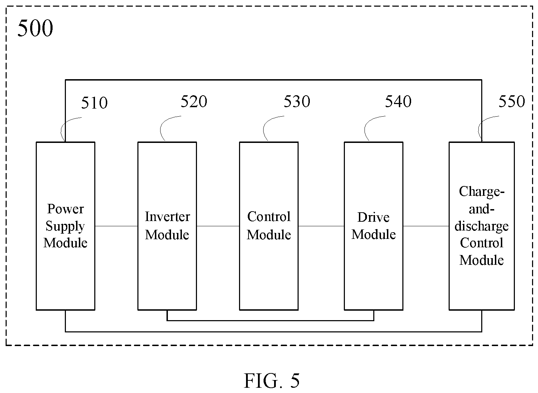

FIG. 5 shows a schematic block diagram of a charge-and-discharge system 500 provided by an embodiment of the present application.

As shown in FIG. 5, the charge-and-discharge system 500 includes a power supply module 510, an inverter module 520, a control module 530, a drive module 540 and a charge-and-discharge control module 550. The control module 530 is configured to control the charge-and-discharge circuit constituted by the power supply module 510, the inverter module 520, the drive module 540 and the charge-and-discharge control module 550. Where the circuit constituted by the power supply module 510, the inverter module 520, the drive module 540 and the charge-and-discharge control module 550 may be equivalent to the charge-and-discharge circuit 200 or 400 in the above embodiments.

In one example, the control module 530 may include a vehicle controller or a vehicle control unit (Vehicle control unit, VCU) and/or a motor controller.

In one example, the power supply module 510 is a power battery.

When the charge-and-discharge system 500 is utilized to heat the power supply module, an enable signal is sent by the controller to the inverter module 520 and the charge-and-discharge control module 550 to control the inverter module and the charge-and-discharge control module in the charge-and-discharge circuit (for example, the charge-and-discharge circuit 200 or 400) to form a charge loop or a discharge loop.

In case that the charge-and-discharge circuit is the charge-and-discharge circuit 200, the upper bridge arm or the lower bridge arm of the M-phase bridge arm is switched on, and the upper bridge arm or the lower bridge arm of the charge-and-discharge loop switch bridge arm is switched on, in response to the enable signal sent by the controller, so that a charge loop or a discharge loop is formed. The charge loop or the discharge loop is switched repeatedly to charge and discharge the power supply module, so that the heat generated when the current passes through the power supply module is utilized to heat the power supply module.

In case that the charge-and-discharge circuit is the charge-and-discharge circuit 400, the upper bridge arm or the lower bridge arm of the M-phase bridge arm is switched on, and the upper bridge arm or the lower bridge arm of the charge-and-discharge loop switch bridge arm is switched on, in response to the enable signal sent by the controller, so that a charge loop or a discharge loop is formed. The first battery pack or the second battery pack is charged or discharged through the charge loop or the discharge loop, and the charge-and-discharge process includes a switching of a charge-and-discharge state of the first battery pack and the second battery pack. The charge-and-discharge state includes that the first battery pack is charged while the second battery pack is discharged; or the first battery pack is discharged while the second battery pack is charged.

In one example, the control module is configured to: determine a state of charge SOC of the power battery. The state of charge (State Of Charge, SOC) refers to a ratio of the remaining power of the battery under a certain discharge rate to the rated capacity under the same conditions. SOC is one of the important parameters of the battery management system, and is also the basis for the charging and discharging control strategy of the entire vehicle and the battery balance work. However, due to the complexity of structure of lithium battery itself, the state of charge of the lithium battery cannot be obtained by a direct measurement. The SOC can only be estimated by using the relevant characteristic curves or calculation formulas according to some external characteristics of the battery, such as the internal resistance, temperature, current and other relevant parameters of the battery.

In an example, the control module is also configured to: receive a heating request sent by the battery management system BMS, where the heating request is configured to indicate that the power battery meets the heating condition.

In one example, by receiving a heating request sent by a battery management system (Battery Management System, BMS), the control module can heat the power battery in time to avoid affecting the use of power devices such as vehicles.

In one example, the control module is also configured to: send a heating stop signal to the inverter module and the charge-and-discharge control module when a temperature of the power battery reaches a preset temperature or a temperature rise of the power battery is abnormal, and to enable the charge loop or the discharge loop to be disconnected, so as to stop heating the power battery.

In one example, the vehicle controller, upon receiving the heating request sent by the BMS, may send a control signal to the motor controller. The control signal is configured to indicate performing a heating on the power battery, that is, the control signal is used to instruct the motor controller to send the enable signal to the inverter module and the charge-and-discharge control module, so that a charge loop or a discharge loop is formed in the charge-and-discharge circuit.

The system of this embodiment is able to control the inverter module and the charge-and-discharge control module through the control module, and can determine when to charge and discharge according to a status of the vehicle, so as to ensure that the power battery can be heated by the battery. By controlling a charge or discharge current to have the same magnitude and the same current phase, the vibration and noise of the motor is effectively suppressed.

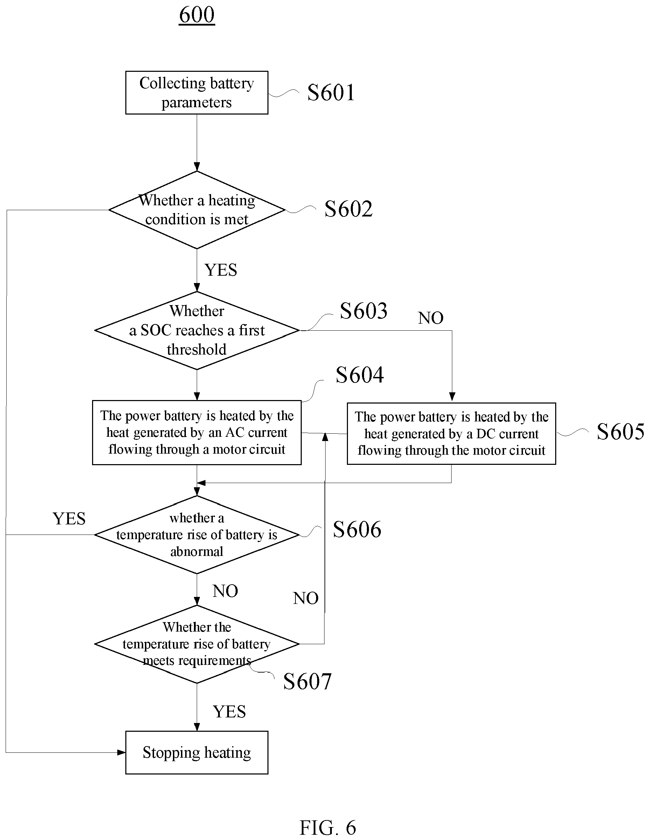

The charge-and-discharge system in the embodiment of the present application has been described in detail above, and a charge-and-discharge control method in an embodiment of the present application will be described in detail below with reference to FIG. 6. Technical features described in the device embodiments are applicable to the following method embodiments.

As shown in FIG. 6, the control method includes the following steps:

In step S601, battery parameters such as temperature, SOC, voltage signal, and current signal of the battery pack are collected by the BMS.

In step S602, whether the heating condition is met is determined by the BMS according to various parameters of the battery, and if the heating condition is met, then a corresponding heating request is sent to the VCU according to the SOC state, for example, an electric power required for heating to a preset temperature is sent to the VCU.

In step S603, whether the SOC of the battery is greater than a first threshold is determined by the BMS or the VCU.

In step S604, if the SOC is greater than the first threshold, then the heat generated by the alternating current flowing through the motor circuit is utilized to heat the power battery.

In step S605, if the SOC is smaller than or equal to the first threshold, then the heat generated by the direct current flowing through the motor circuit is utilized to heat the power battery.

After the step 604, a current operation mode of the first motor is acquired by the VCU.

For example, if the first motor is in a driving mode (i.e., operation mode), then a driving signal is sent by the VCU to the motor controller. At this time, an enable signal is sent by the motor controller to the inverter module and the charge-and-discharge control module to control the upper bridge arm or the lower bridge arm of the M-phase bridge arm of the inverter module to be switched on, and control the upper bridge arm or the lower bridge arm of the charge-and-discharge loop switch bridge arm of the charge-and-discharge control module to be switched on.

In one example, the motor controller periodically sends enable signals to control different relevant bridge arms to be switched on, thereby realizing a switching between the charge loop and the discharge loop, and realizing an inverter control for current of the power battery.

In step S606, whether a temperature of the battery pack is abnormal is determined by the BMS, and if the temperature of the battery pack is abnormal, then abnormal temperature rise information is sent to the VCU, and then the VCU forwards the abnormal temperature rise information to the motor controller, to stop heating.

In step S607, if it is determined in step S606 that the temperature rise is normal, then whether the temperature of the battery pack meets requirements is determined by the BMS. If the temperature meets the requirements, the heating stop information is forwarded by the VCU to the motor controller to stop heating. If the temperature fails to meet the requirements, then the steps S601 to S606 are repeated.

The embodiments of the present application may be applied to a scenario of heating power battery at a low temperature. For example, the embodiments of the present application may be applied to specific scenarios where the temperature of the power battery is raised by heating the power battery to a temperature at which the battery pack can be used normally. Specifically, in an embodiment of the present application, when the state of charge (State Of Charge, SOC) of the battery is greater than the first threshold, the current flowing through the loop can be modulated into an alternating current, and the alternating current is utilized to generate heat through the internal resistance of the power battery, thereby heating the power battery, which can improve the heating efficiency. When the battery SOC is smaller than or equal to the first threshold, that is, when the battery power is insufficient, the power battery is heated by utilizing the direct current to generate heat in the winding, which can reduce power consumption and improve the flexibility of the power battery heating system.

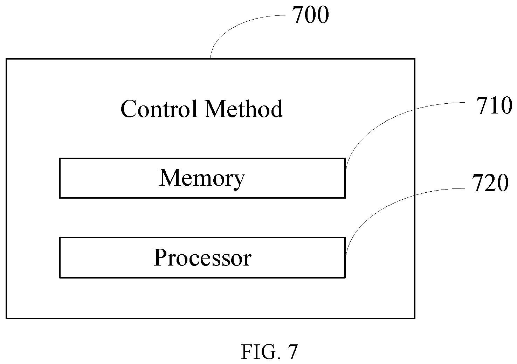

FIG. 7 shows a schematic block diagram of a control circuit 700 for the charge-and-discharge system according to the embodiment of the present application. As shown in FIG. 9, the control circuit 700 includes a processor 710. Optionally, the control circuit 700 also includes a memory s20, wherein the memory 720 is configured to store instructions, and the processor 710 is configured to read the instructions and execute the foregoing methods in various embodiments of the present application based on the instructions.

It would be appreciated by those skilled in the art that the exemplary units and algorithm steps described in conjunction with the embodiments disclosed herein can be implemented through electronic hardware, or through a combination of computer software and electronic hardware. Whether these functions are executed by hardware or software depends on the specific application and design constraints of the technical solutions. Technical professionals may use different methods to implement the described functions for each specific application, and such implementation should not be regarded as exceeding the scope of the present application.

It can be clearly understood by those skilled in the art that for the convenience and brevity of description, the specific operation process of the above-described system, device and unit may refer to the corresponding process in the foregoing method embodiment, which will not be repeated here.

In the above several embodiments provided by the present application, it should be understood that the disclosed systems, devices and methods may be implemented in other ways. For example, the device embodiments described above are only illustrative. For example, the division of units is only a logical function division. In actual implementation, other division methods may also be possible. For example, multiple units or components may be combined or integrated into another system, or some features may be ignored, or not implemented. In another point, the mutual coupling or direct coupling or communication connection shown or discussed may be an indirect coupling or a communication connection through some interfaces, devices or units, and may be in electrical, mechanical or other forms.

The units described as separate components may or may not be physically separated, and the components shown as units may or may not be physical units, that is, these units may be located in one place, or may be distributed to multiple network units. Part or all of the units can be selected according to actual needs to achieve the purpose of the solution of the embodiment.

In addition, each functional unit in each embodiment of the present application may be integrated into one processing unit, each unit may exist separately in physical, or two or more units may be integrated into one unit.

If the functions described above are realized in the form of software function units and sold or used as independent products, these function units may be stored in a computer-readable storage medium. Based on this understanding, the technical solution of the present application may be embodied in the form of a software product in essence, or the part that contributes to the prior art or the technical solution may be embodied in the form of a software product. The computer software product is stored in a storage medium, including several instructions that are configured to cause a computer device (which may be a personal computer, a server, or a network device, etc.) execute all or part of the steps of the methods described in the various embodiments of the present application. The aforementioned storage medium includes: a U disk, a mobile hard disk, a read-only memory (Read-Only Memory, ROM), a random-access memory (Random Access Memory, RAM), a magnetic disk or an optical disk and other media that can store program codes.

The above is merely some specific implementations of the present application, and the protection scope of the present application is not limited to these implementations. Modifications or substitutions that can be easily appreciated by persons of ordinary skill in the art shall all be included within the protection scope of the present application. Thus, the protection scope of the present application should be based on the protection scope of the claims.

## Claims

1. A charge-and-discharge circuit, comprising:
a power supply module, comprising at least a first battery pack; and
an inverter module, comprising an M-phase bridge arm, wherein M is a positive integer greater than 0; and
a charge-and-discharge control module, comprising a charge-and-discharge loop switch bridge arm; and
a drive module, comprising an M-phase motor;
wherein, the first battery pack, the M-phase bridge arm and the charge-and-discharge loop switch bridge arm are connected in parallel;
junction points between upper bridge arms and lower bridge arms of the M-phase bridge arm are respectively connected to M phases of windings of the M-phase motor in a one-to-one correspondence manner;
a junction point between an upper bridge arm and a lower bridge arm of the charge-and-discharge loop switch bridge arm is connected to the M-phase motor.

2. The charge-and-discharge circuit according to claim 1, wherein at least one external inductance unit is arranged between the M-phase motor and the charge-and-discharge loop switch bridge arm.

3. The charge-and-discharge circuit according to claim 2, wherein the junction point between the upper bridge arm and the lower bridge arm of the charge-and-discharge loop switch bridge arm is connected to the M-phase motor comprises that:
the junction point between the upper bridge arm and the lower bridge arm of the charge-and-discharge loop switch bridge arm is connected to one end of the at least one external inductance unit, and the other two ends of the at least one external inductance unit are connected to a junction point of the M phases of windings of the M-phase motor.

4. The charge-and-discharge circuit according to claim 1, wherein the M-phase motor is a dual-motor comprising a first M-phase motor and a second M-phase motor; and wherein a junction point of M phases of windings of the first M-phase motor is connected to a junction point of M phases of windings of the second M-phase motor.

5. The charge-and-discharge circuit according to claim 4, wherein the junction points between the upper bridge arms and the lower bridge arms of the M-phase bridge arm are respectively connected to the M phases of windings of the M-phase motor in a one-to-one correspondence manner comprises that:
the junction points between the upper bridge arms and the lower bridge arms of the M-phase bridge arm are respectively connected to the M phases of windings of the first M-phase motor in a one-to-one correspondence manner.

6. The charge-and-discharge circuit according to claim 4, wherein the junction point between the upper bridge arm and the lower bridge arm of the charge-and-discharge loop switch bridge arm is connected to the M-phase motor comprises that:
junction points between upper bridge arms and lower bridge arms of the charge-and-discharge loop switch bridge arm are respectively connected to the M phases of windings of the second M-phase motor in a one-to-one correspondence manner.

7. A charge-and-discharge circuit, comprising:
a power supply module, comprising at least a first battery pack and a second battery pack; and
an inverter module, comprising an M-phase bridge arm, wherein M is a positive integer greater than 0; and
a charge-and-discharge control module, comprising a charge-and-discharge loop switch bridge arm; and
a drive module, comprising an M-phase motor; and
a switch unit;
wherein, the first battery pack and the M-phase bridge arm are connected in parallel, wherein a first end of the first battery pack and upper bridge arms of the M-phase bridge arm are collinearly connected;
junction points between lower bridge arms and the upper bridge arms of the M-phase bridge arm are respectively connected to M phases of windings of the M-phase motor in a one-to-one correspondence manner;
a junction point between an upper bridge arm and a lower bridge arm of the charge-and-discharge loop switch bridge arm is connected to the M-phase motor;
a first end of the second battery pack and the upper bridge arm of the charge-and-discharge loop switch bridge arm are collinearly connected; a second end of the second battery pack, a second end of the first battery pack, the lower bridge arms of the M-phase bridge arm and the charge-and-discharge loop switch bridge arm are collinearly connected;
the switch unit is arranged between the first end of the first battery pack and the first end of the second battery pack.

8. The charge-and-discharge circuit according to claim 7, further comprising: at least one external inductance unit arranged between the M-phase motor and the charge-and-discharge loop switch bridge arm.

9. The charge-and-discharge circuit according to claim 8, wherein the junction point between the upper bridge arm and the lower bridge arm of the charge-and-discharge loop switch bridge arm is connected to the M-phase motor comprises that:
the junction point between the upper bridge arm and the lower bridge arm of the charge-and-discharge loop switch bridge arm is connected to one end of the at least one external inductance unit, and the other end of the at least one external inductance unit is connected to a junction point of the M phases of windings of the M-phase motor.

10. The charge-and-discharge circuit according to claim 1, wherein the M-phase motor is a dual-motor comprising a first M-phase motor and a second M-phase motor; and wherein a junction point of M phases of windings of the first M-phase motor is connected to a junction point of M phases of windings of the second M-phase motor.

11. The charge-and-discharge circuit according to claim 10, wherein the junction points between the upper bridge arms and the lower bridge arms of the M-phase bridge arm are respectively connected to the M phases of windings of the M-phase motor in a one-to-one correspondence manner comprises that:
the junction points between the upper bridge arms and the lower bridge arms of the M-phase bridge arm are respectively connected to the M phases of windings of the first M-phase motor in a one-to-one correspondence manner.

12. The charge-and-discharge circuit according to claim 10, wherein the junction point between the upper bridge arm and the lower bridge arm of the charge-and-discharge loop switch bridge arm is connected to the M-phase motor comprises that:
junction points between upper bridge arms and lower bridge arms of the charge-and-discharge loop switch bridge arm are respectively connected to the M phases of windings of the second M-phase motor in a one-to-one correspondence manner.

13. A charge-and-discharge system, comprising:
a control module; and
the charge-and-discharge circuit according to any one of claims 1 to 12,
wherein the control module is configured to send an instruction to the charge-and-discharge circuit to control the power supply module to be charged or discharged.

14. A charge-and-discharge control method, applied to a power consumption system, the power consumption system comprising:
a control module; and
a charge-and-discharge circuit, comprising:
a power supply module, comprising at least a first battery pack;
an inverter module, comprising an M-phase bridge arm, wherein M is a positive integer greater than 0;
a charge-and-discharge control module, comprising a charge-and-discharge loop switch bridge arm; and
a drive module, comprising an M-phase motor;
wherein the first battery pack, the M-phase bridge arm, and the charge-and-discharge loop switch bridge arm are connected in parallel; junction points between upper bridge arms and lower bridge arms of the M-phase bridge arm are respectively connected to M phases of windings of the M-phase motor in a one-to-one correspondence manner, a junction point between an upper bridge arm and a lower bridge arm of the charge-and-discharge loop switch bridge arm is connected to the M-phase motor;
the method, comprising:
in response to an enable signal sent by the controller, switching on the upper bridge arms or the lower bridge arms of the M-phase bridge arm, and switching on the upper bridge arm or the lower bridge arm of the charge-and-discharge switch bridge arm, so as to form a charge loop or a discharge loop; and repeatedly switching between the charge loop and the discharge loop to charge and discharge the power supply module.

15. A charge-and-discharge control method, applied to a power consumption system, the power consumption system comprising:
a control module; and
a charge-and-discharge circuit, comprising:
a power supply module, comprising at least a first battery pack and a second battery pack;
an inverter module, comprising an M-phase bridge arm, wherein M is a positive integer greater than 0;
a charge-and-discharge control module, comprising a charge-and-discharge loop switch bridge arm; and
a drive module, comprising an M-phase motor;
wherein, the first battery pack and the M-phase bridge arm are connected in parallel, wherein a first end of the first battery pack and upper bridge arms of the M-phase bridge arm are collinearly connected; junction points between lower bridge arms and the upper bridge arms of the M-phase bridge arm are respectively connected to M phases of windings of the M-phase motor in a one-to-one correspondence manner; a junction point between an upper bridge arm and a lower bridge arm of the charge-and-discharge loop switch bridge arm is connected to the M-phase motor; a first end of the second battery pack and the upper bridge arm of the charge-and-discharge loop switch bridge arm are collinearly connected; a second end of the second battery pack, a second end of the first battery pack, the lower bridge arms of the M-phase bridge arm and the charge-and-discharge loop switch bridge arm are collinearly connected; and the switch unit is arranged between the first end of the first battery pack and the first end of the second battery pack;
the method, comprising:
in response to an enable signal sent by the controller, switching on the upper bridge arms or the lower bridge arms of the M-phase bridge arm, and switching on the upper bridge arm or the lower bridge arm of the charge-and-discharge switch bridge arm, so as to form a charge loop or a discharge loop; charging or discharging the first battery pack or the second battery pack through the charge loop or the discharge loop, and the charging and discharging comprises switching a charge-and-discharge state of the first battery pack and the second battery pack; wherein the switching the charge-and-discharge state comprises charging the first battery pack and discharging the second battery pack, or discharging the first battery pack and charging the second battery pack.
